# EUROPEAN PATENT APPLICATION

(11) **EP 2 371 652 A1**
(43) Date of publication of application: **05.10.2011**
(21) Application number: 10818323.7
(22) Date of filing: 30.06.2010
(51) Int. Cl.: B61D 17/02

(54) **DRAG REDUCTION DEVICE BETWEEN CARRIAGES OF HIGH-SPEED MOTOR TRAIN SET**

(30) Priority: 24.09.2009 CN 200910075495
(71) Applicant: Tangshan Railway Vehicle Co., Ltd, Tangshan, Hebei 063035 (CN)
(72) Inventor: SUN, Bangcheng, Tangshan Hebei 063035 (CN); WANG, Lihang, Tangshan Hebei 063035 (CN); GAO, Jun, Tangshan Hebei 063035 (CN); MA, Jijun, Tangshan Hebei 063035 (CN); LIU, Jin, Tangshan Hebei 063035 (CN); ZHANG, Qinggang, Tangshan Hebei 063035 (CN)
(74) Representative: Pfenning, Meinig & Partner GbR
(86) International application number: PCT/CN2010/074773
(87) International publication number: WO 2011/035629

(57) **Abstract**

The present invention provides a drag reduction device between carriages of high-speed multiple units for reducing air drag, which belongs to the technical field of railway carriages. The technical solution of the present invention is as follows: a drag reduction device between carriages of high-speed multiple units comprises side windshields arranged on side edges of each end wall of a carriage body. Each of the side windshields includes a bar rubber capsule and a rubber capsule frame whose shapes are matched with a curve of the side edge of the end wall of the carriage body. The rubber capsule is connected with the end wall of the carriage body by the rubber capsule frame. The device is simple in structure, convenient and quick to install, and the multiple units need not to be broken up or made up. Furthermore, the device can effectively reduce the air drag resulting from the impact of the airflow on the end wall of the carriage body and increase the running speed of the train.

## Description

This application claims priority to Chinese Patent Application No. 200910075495.3, filed with Chinese Patent Office on September 24, 2009 and entitled 'Drag Reduction Device between Carriages of High-Speed Multiple Units', which is incorporated herein by reference in its entirety.

### FIELD OF THE TECHNOLOGY

The present invention relates to a device arranged between carriages of high-speed multiple units for reducing the air drag and improving the running speed, and the device belongs to the technical field of railway carriages.

### BACKGROUND

When the running speed of an ordinary train is 120km/h, the air drag of the train is 40% of total drag, and when the running speed reaches 160km/h, the air drag is 70% of total drag. Since the air drag of the train is in direct proportion to the square of the running speed of this train, the improvement in the running speed of the train needs to reduce the air drag of the train. The factors affecting the air drag of the train include running speed, head shape of the carriage body, carriage body contour, structural form of the carriage ends, etc.

Since a gap exists between the end parts of two adjacent carriages of high-speed multiple units, splitting and disturbance of airflow will occur as long as the air flow impacts on the end walls of the carriage body during the running of the multiple units with the running speed more than 200km/h, so that the air drag is increased. Therefore, the change in the structural form of end parts of the carriage body and reduction of the splitting and disturbance of air flow herein are really significant to running speed improvement, as well as energy saving and consumption reduction.

### SUMMARY

An object of the present invention is to provide a drag reduction device between carriages of high-speed multiple units, which has a simple structure and can effectively reduce the air drag resulting from the impact of the airflow on the end wall of the carriage body.

The problem of the present invention can be solved by the technical solution described below.

A drag reduction device between carriages of high-speed multiple units comprises side windshields arranged on side edges of each end wall of a carriage body. Each of the side windshields includes a bar rubber capsule and a rubber capsule frame whose shapes are matched with a curve of the side edge of the end wall of the carriage body. The bar rubber capsule is connected with the end wall of the carriage body by the rubber capsule frame.

The drag reduction device between carriages of high-speed multiple units further comprises a top guide plate fixed on an upper edge of the end wall of the carriage body. A radian of the top guide plate is matched with a radian of a roof plate of the carriage body, the top guide plate is in butt joint with the roof plate of the carriage body, and two ends of the top guide plate are in butt joint with the side windshields.

The drag reduction device between carriages of high-speed multiple units further comprises a bottom guide plate below each of the side windshields. A radian of the bottom guide plate is matched with a radian of a lower skirt edge of the carriage body. The bottom guide plate is fixed on an underframe of the carriage by a bottom guide plate bracket, and an upper end of the bottom guide plate is in butt joint with the corresponding side windshield.

According to the present invention, the side windshields are additionally arranged on two sides of the end wall of the carriage body to streamline the carriage body contour, thereby effectively reducing the disturbance of airflow and the air drag. The main body of the side windshield is composed of the rubber capsule, such that not only the gap between the sidewalls of two adjacent carriage bodies as well as the air drag are reduced, but also the excellent curve negotiation performance of the train can be guaranteed. The top guide plate and the bottom guide plates are used to shorten the distance between the adjacent carriages as much as possible and reduce the air splitting, and accordingly the air drag can be reduced to a maximum extent. The device is simple in structure, convenient and quick to install, and the multiple units need not to be broken up or made up. Furthermore, the device can effectively reduce the air drag resulting from the impact of the airflow on the end wall of the carriage body and increase the running speed of the train.

### BRIEF DESCRIPTION OF THE DRAWINGS

Further detailed discussion of the present invention is made below with reference to the drawings.

FIG.1 is a structural schematic diagram according to an embodiment of the present invention;

FIG.2 is a left view of FIG.1;

FIG.3 is a structural schematic diagram of a top guide plate according to the embodiment of the present invention;

FIG.4 is a top view of FIG.3;

FIG.5 is a structural schematic diagram of a windshield according to the embodiment of the present invention;

FIG.6 is a sectional view taken along line A-A of FIG. 5;

FIG.7 is a sectional view of the windshield after two carriages are connected;

FIG.8 is a structural schematic diagram of a bottom guide plate according to the embodiment of the present invention;

FIG.9 is a left view of FIG.8;

FIG.10 is a structural schematic diagram of a bottom guide plate bracket according to the embodiment of the present invention; and

FIG.11 is a schematic diagram of the installation according to the embodiment of the present invention.

### Reference signs:

| | |
|---|---|
| 1-windshield | 2-bottom guide plate |
| 3-top guide plate | 4-rubber capsule frame |
| 5-rubber capsule | 6-bottom guide plate bracket |
| 7-carriage body | 8-bolt |

### DETAILED DESCRIPTION

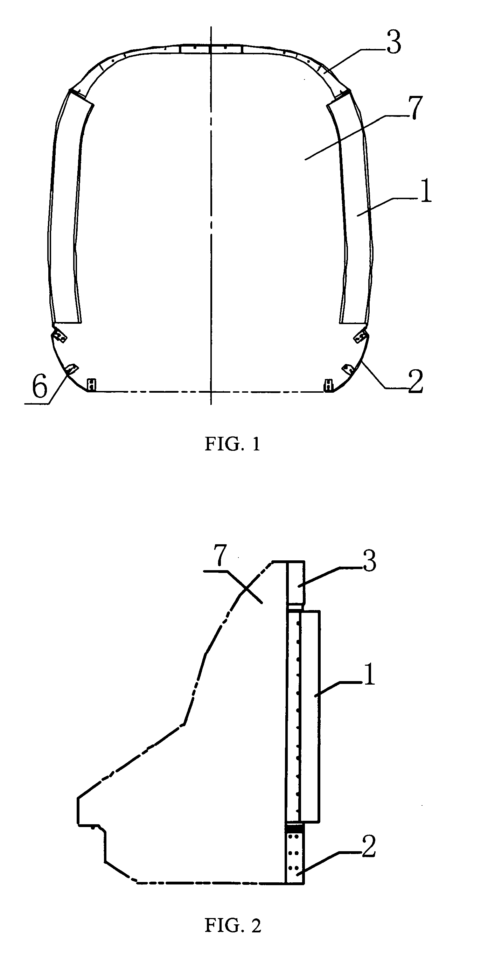

Referring to FIG. 1 and FIG. 2, a drag reduction device between carriages of high-speed multiple units according to an embodiment of the present invention comprises three parts, which are a top guide plate 3, bottom guide plates 2 and windshields 1. The windshields 1 are additionally arranged to streamline the contour of the carriage body 7 and thus reduce the disturbance of airflow and the air drag. The top guide plate 3 and the bottom guide plates 2 are additionally arranged to shorten the distance between the carriages and reduce the air splitting.

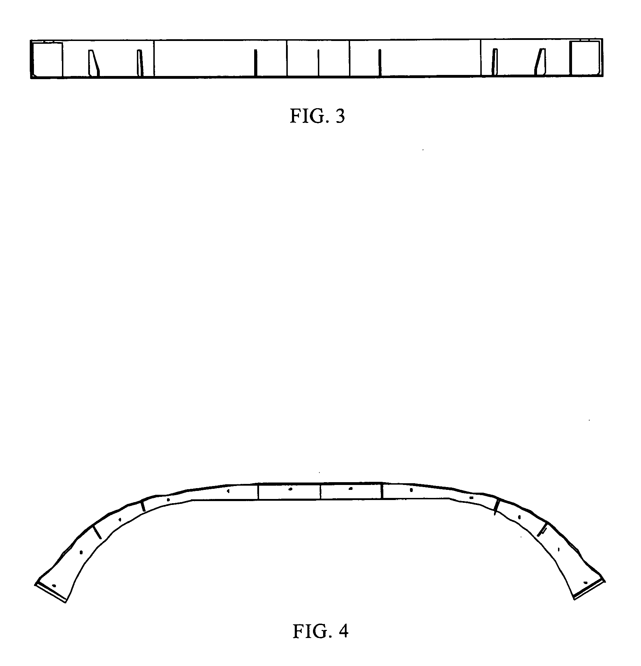

Referring to FIG. 3 and FIG. 4, the top guide plate 3 is formed by welding aluminum plates and mounted on the carriage roof by bolts.

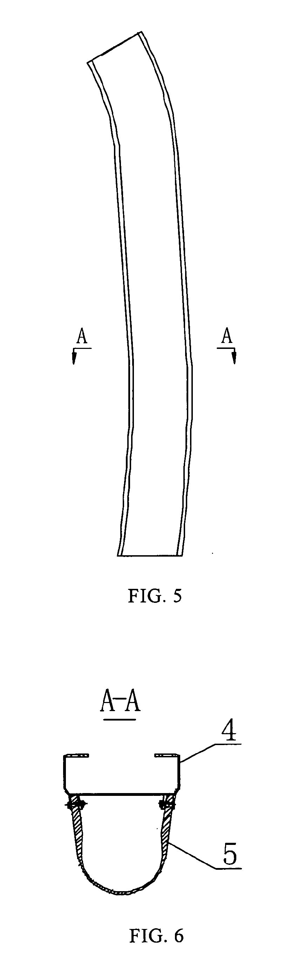

Referring to FIG. 5 to FIG. 7, each of the windshields 1 includes a rubber capsule frame 4 and a rubber capsule 5. The rubber capsule 5 is fixed on the rubber capsule frame 4 by bolts 8. The rubber capsule frame 4 is mounted on an end wall of the carriage body by bolts 8. After the coupling of two carriages, the rubber capsules 5 of the windshields 1 of two carriages are in close contact with each other such that the contour of the carriage body 7 is streamlined, and thereby the disturbance of airflow and the air drag are reduced.

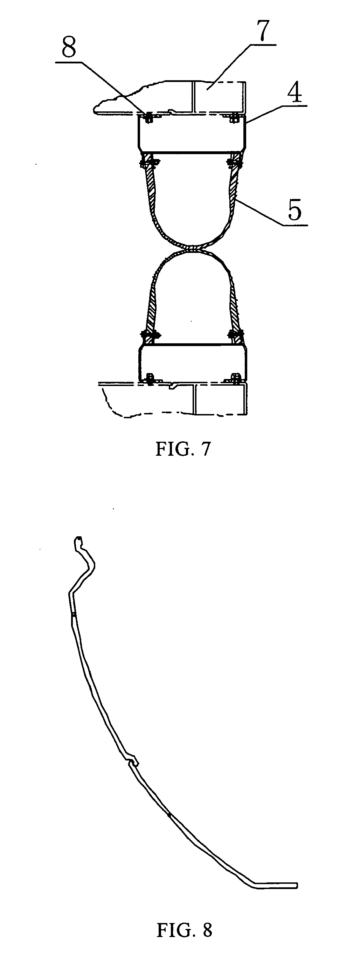

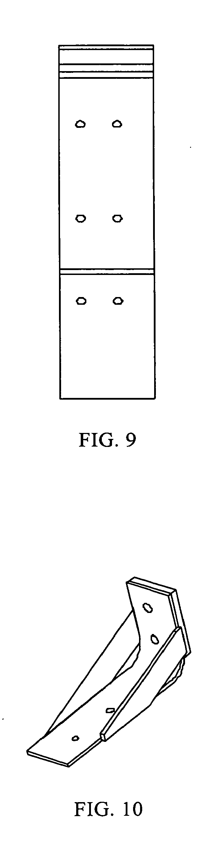

Referring to FIG. 8 to FIG. 10, the bottom guide plate 2 is formed by welding aluminum profiles and fixed on an underframe of the carriage by a bottom guide plate bracket 6.

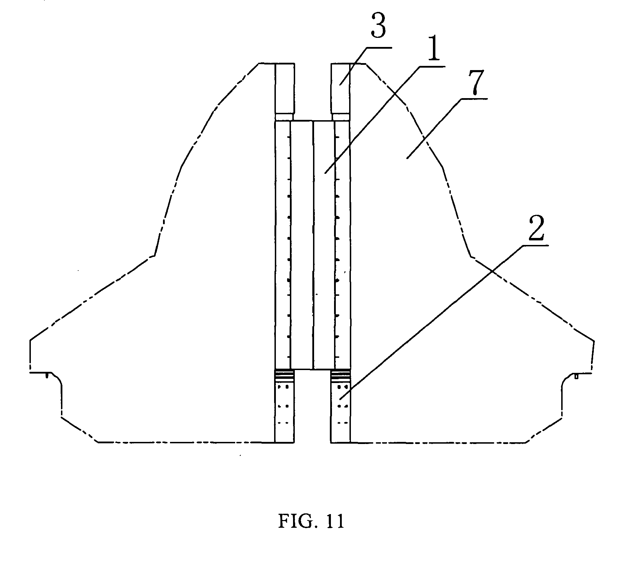

Referring to FIG. 11, the distance between the carriages is shortened and the diversion of air is reduced after the top guide plate 3 and the bottom guide plates 2 are mounted in the carriages of high-speed multiple units.

The drag reduction of the present invention can be quickly installed and the multiple units need not to be broken up or made up. The device can be filed-installed with bolts according to the requirement of line operation and test. In addition, the device is simple in structure, has the excellent air drag reduction effect as well as curve negotiation performance, and meets the relevant requirements of EN12663:2000 "Railway Applications - Structural Requirements of Railway Vehicle Bodies".

## Claims

1. A drag reduction device between carriages of high-speed multiple units, comprising side windshields (1) arranged on side edges of each end wall of a carriage body, wherein each of the side windshields (1) includes a bar rubber capsule (5) and a rubber capsule frame (4) whose shapes are matched with a curve of the side edge of the end wall of the carriage body, and the bar rubber capsule (5) is connected with the end wall of the carriage body by the rubber capsule frame (4).

2. The drag reduction device between carriages of high-speed multiple units according to claim 1, further comprising a top guide plate (3) fixed on an upper edge of the end wall of the carriage body, wherein a radian of the top guide plate (3) is matched with a radian of a roof plate of the carriage body, the top guide plate (3) is in butt joint with the roof plate of the carriage body, and two ends of the top guide plate are in butt joint with the side windshields (1).

3. The drag reduction device between carriages of high-speed multiple units according to claim 1 or 2, further comprising a bottom guide plate (2) below each of the side windshields (1), wherein a radian of the bottom guide plate (2) is matched with a radian of a lower skirt edge of the carriage body, the bottom guide plate (2) is fixed on an underframe of the carriage by a bottom guide plate bracket (6), and an upper end of the bottom guide plate (2) is in butt joint with the corresponding side windshield (1).
